# EUROPEAN PATENT SPECIFICATION

(11) **EP 2 597 281 B1**
(45) Date of publication and mention of the grant of the patent: **02.03.2016**
(21) Application number: 10854988.2
(22) Date of filing: 21.07.2010
(51) Int. Cl.: F01N 3/36, F01N 3/02, F01N 3/20, F01N 3/24, F01N 3/08, F01N 3/10, F01N 3/38, B01D 53/94, B01F 3/04, B01F 5/02, F01N 13/08, F01N 3/28, F01N 13/00

(54) **EXHAUST GAS PURIFICATION DEVICE FOR INTERNAL COMBUSTION ENGINE**
ABGASREINIGUNGSVORRICHTUNG FÜR EINEN VERBRENNUNGSMOTOR
DISPOSITIF D'ÉPURATION DES GAZ D'ÉCHAPPEMENT POUR MOTEUR À COMBUSTION INTERNE

(43) Date of publication of application: 29.05.2013
(73) Proprietor: TOYOTA JIDOSHA KABUSHIKI KAISHA, Toyota-shi, Aichi-ken, 471-8571 (JP)
(72) Inventor: NAKANO, Takanori, Toyota-shi, Aichi-ken, 471-8571 (JP)
(74) Representative: Kuhnen & Wacker
(86) International application number: PCT/JP2010/004667
(87) International publication number: WO 2012/011148

(56) References cited:
- JP-A- 2000 352 305
- JP-A- 2004 044 405
- JP-A- 2008 014 213
- JP-A- 2009 209 804
- JP-A- 2010 084 710
- JP-A- 2010 084 710
- US-A1- 2009 084 091

## Description

### Technical Field

The present invention relates to an exhaust purifying device for an internal combustion engine.

### Background Art

There are some cases where, for supplying fuel to an exhaust purifying catalyst disposed in an exhaust passage in an internal combustion engine, fuel of a liquid (for example, light oil or gasoline) is injected from a fuel injection valve provided upstream the catalyst. The aim includes, for example, a temperature rise by combustion or oxidation of fuel, oxidation removal of PM (particulate matter) deposited in the catalyst, reduction in a NOx storage reduction catalyst, and recovery from sulfur poisoning. For reforming the fuel supplied with such an aim, there is proposed an apparatus where a compact exhaust purifying catalyst (small-section catalyst) is arranged in an exhaust passage upstream an exhaust purifying catalyst as a target to cause an exhaust gas to flow between an outer peripheral surface of the exhaust purifying catalyst and a wall surface in the exhaust passage, thus supplying the fuel to the small-section catalyst (for example, Japanese Patent Laid-Open No. 2009-209804).

Dispersibility of the fuel injected in the exhaust gas can be increased by finely atomizing particles of the fuel. Therefore there are some cases where a collision member is provided in a position where fuel sprays injected from the fuel injection valve collide to cause the fuel to collide with the collision member, thus performing the grain refining and the atomization of the fuel. As this kind of collision members, a collision member (for example, a collision plate, a dispersing plate or the like) provided opposing an injection direction of the fuel may be exemplified.

### Citation List

### Patent Literature

PTL 1: Japanese Patent Laid-Open No. 2009-209804
PTL 2: Japanese Patent Laid-Open No. H02-149712(1990)
PTL 3: Japanese Patent Laid-Open No. 2009-57954
PTL 4: United States Patent Application Publication No. US 2009/0084091 A1

### Summary of Invention

### Technical Problem

In the apparatus disclosed in Japanese Patent Laid-Open No. 2009-209804, a collision plate is fixed to a small-section catalyst. The small-section catalyst is decenterized downwards in the exhaust passage, and the collision plate is fixed to an upper end of the upstream end portion of the small-section catalyst, wherein fuel is injected upwards toward the collision plate from a fuel injection valve. United States Patent Application Publication No. US 2009/0084091 A1 discloses apparatuses positioning each small-section catalyst either in the center of an exhaust passage or in direct contact with a top wall surface of the exhaust passage close to an injection valve, wherein fuel is injected toward the small-section catalyst.

However, in a case where an injection quantity of the fuel is excessively large, there is a possibility that the fuel tends to easily adhere to the collision member and a stagnation quantity of the fuel onto a surface of the collision member becomes large. This problem is not solved yet even in each of the apparatuses disclosed in Japanese Patent Laid-Open No. H02-149712(1990) and Japanese Patent Laid-Open No. 2009-57954.

The present invention is made in view of the foregoing situations, and an object of the present invention is to provide a technology in which, in an exhaust purifying device for an internal combustion engine causing fuel injected from a fuel injection valve to collide with a collision member provided in an exhaust passage to promote grain refining of the fuel, stagnation of the fuel onto a surface of the collision member can be suppressed.

### Solution to Problem

A first aspect of the present invention provides an exhaust purifying device for an internal combustion engine comprising,
a small-section catalyst arranged in an exhaust passage of the internal combustion engine and formed so that an exhaust gas flows between an outer peripheral surface of the small-section catalyst and a wall surface of the exhaust passage, a fuel injection valve for injecting liquid fuel toward the exhaust passage upstream the small-section catalyst, a collision plate provided in the exhaust passage upstream the small-section catalyst and provided in a position where the fuel injected from the fuel injection valve collides, and a heating device capable of igniting the fuel injected from the fuel injection valve, wherein the small-section catalyst and the collision plate are decentered in a predetermined direction in the exhaust passage, and the fuel injection valve injects the fuel in said predetermined direction toward the collision plate.

According to this aspect, the decentering of the small-section catalyst in the predetermined direction in the exhaust passage allows a wide-side bypass path having a relatively large cross-sectional area to be formed in the exhaust passage, wherein a main flow of the exhaust gas is formed in the wide-side bypass path. On the other hand, since the fuel injection valve injects the fuel in the predetermined direction toward the collision plate, a surface of the collision plate to which the fuel adheres faces the wide-side bypass path. Therefore, even if the fuel adheres to the collision plate, since the surface of the collision plate to which the fuel adheres is exposed to the main stream having a relatively large flow speed, it is possible to suppress the stagnation of the adherent fuel on the surface of the collision plate. In addition, since there is provided a heating device capable of igniting the fuel injected from the fuel injection valve, by igniting the fuel adhering to the surface of the collision plate or floating in the vicinity thereto, the stagnation of the fuel can be suppressed and a temperature of the exhaust gas can be made high.

Preferably, the exhaust passage includes a curved portion, and at least a part of the collision plate is arranged in the curved portion and is curved in the same direction as a direction of the curved portion. If the curve of each of the exhaust passage and the collision plate is formed so that the predetermined direction is directed to the outside, since the main flow of the exhaust gas is biased by a centrifugal force toward the fuel having adhered to the collision plate, the stagnation of the fuel on the surface of the collision plate can be preferably suppressed. If the curve of each of the exhaust passage and the collision plate is formed so that the predetermined direction is directed to the inside, since the flow speed of the main flow becomes large by the centrifugal force, the stagnation of the fuel on the surface of the collision plate can be preferably suppressed.

Preferably, a rear end part of the collision plate is fixed to an end portion in said predetermined direction side of a front end part of the small-section catalyst. In this case, the fuel having adhered to the collision plate can be preferably guided to the small-section catalyst.

Preferably, the collision plate includes a vent hole downstream the heating apparatus. In this case, propagation of flames through the vent hole enables a section downstream of the collision plate in the outside of the small-section catalyst to be heated.

Preferably said predetermined direction is a downward direction.

It should be noted that measures for solving the problem in the present invention may be used in a combination thereof as much as possible.

### Advantageous Effects of the Invention

According to the present invention, in the exhaust purifying device for the internal combustion engine for promoting grain refining of the fuel by causing the fuel injected from the fuel injection valve to collide with the collision plate provided in the exhaust passage, the stagnation of the fuel adhering to the collision plate can be suppressed.

### Brief Description of Drawings

[Fig. 1] Fig. 1 is a concept diagram showing a schematic structure of an engine and an intake and exhaust system thereof according to a first embodiment;
[Fig. 2] Fig. 2 is a partially detailed diagram of the exhaust system in the engine according to the first embodiment;
[Fig. 3] Fig. 3 is a cross section of line A - A in Fig. 2;
[Fig. 4] Fig. 4 is a partially detailed diagram of an exhaust system in an engine according to a second embodiment;
[Fig. 5] Fig. 5 is a partially detailed diagram of an exhaust system in an engine according to a third embodiment;
[Fig. 6] Fig. 6 is a partially detailed diagram of an exhaust system in an engine according to a fourth embodiment; and
[Fig. 7] Fig. 7 is a plan view showing a collision plate according to the fourth embodiment.

### Description of Embodiments

Hereinafter, an explanation will be made of the details of embodiments for implementing the present invention in an exemplifying manner. However, it should be understood that dimensions, materials, configurations, relative arrangements and the like of construction elements described in the embodiments should not be interpreted to limit the technical scope of the present invention thereto only unless specifically described.

### <First Embodiment>

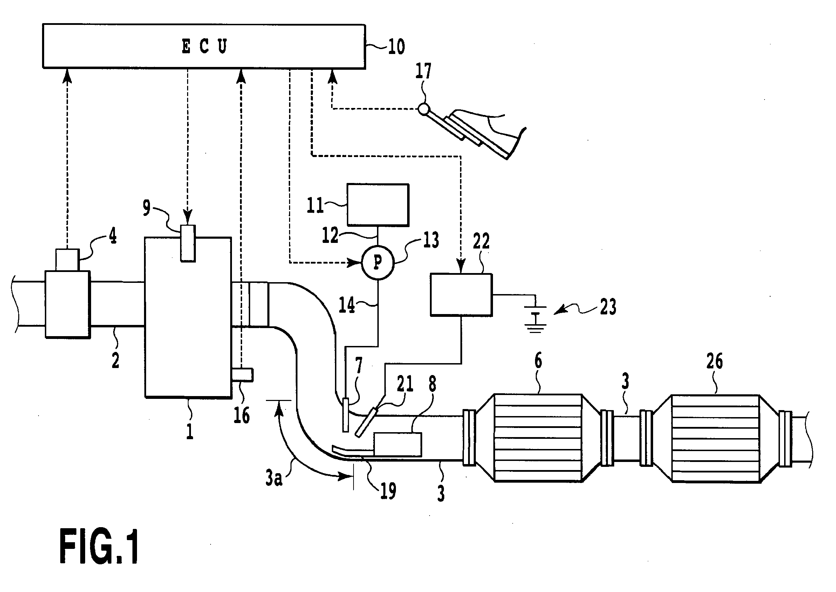

A first embodiment for implementing the present invention will be explained. Fig. 1 is a diagram showing a schematic structure of an engine 1 and an intake and exhaust system thereof according to the first embodiment. The engine 1 shown in Fig. 1 is an in-vehicle four-cycle diesel engine.

An intake conduit 2 and an exhaust conduit 3 (exhaust passage) are connected to the engine 1. An air flow meter 4 is provided in the halfway of the intake conduit 2 for outputting a signal in accordance with a flow quantity of intake air flowing in the intake conduit 2. An intake air quantity flowing into the engine 1 is detected by the air flow meter 4.

The exhaust conduit 3 is connected to a muffler (not shown), and an oxidation catalyst 6 and a NOx catalyst 26 are arranged in the halfway of the exhaust conduit 3. The oxidation catalyst 6 is a catalyst for causing unburned ingredients such as HC and CO to react to O₂ to form CO, CO₂ H₂O and the like. Examples of catalytic substances may include Pt/CeO₂, Mn/CeO₂, Fe/ CeO₂, Ni/CeO₂, Cu/CeO₂ and the like. The NOx catalyst 26 preferably comprises any of a NOx storage reduction (NSR) catalyst and a NOx selective catalytic reduction (SCR). The NOx catalyst 26 has a function of adsorbing NOx in the exhaust gas when an oxygen concentration of the exhaust gas flowing in is high and a function of reducing the adsorbed NOx when the oxygen concentration of the exhaust gas flowing in is low and a reduction ingredient (for example, fuel or the like) exists.

A fuel injection valve 7 is installed upstream the oxidation catalyst 6 in the exhaust conduit 3 for adding fuel of a liquid (light oil) into the exhaust gas. A fuel tank 11 of the engine 1 is connected through a fuel suction pipe 12 to a fuel pump 13. The fuel pump 13 is of a mechanical type, and operates using a driving force of an output shaft (crank shaft) (not shown) of the engine 1. The fuel pump 13 is further connected via a fuel supply pipe 14 to the fuel injection valve 7. In the above structure, the fuel pump 13 sucks the fuel reserved in the fuel tank 11 through the fuel suction pipe 12 and pumps out the fuel to the fuel supply pipe 14, thus supplying the fuel to the fuel injection valve 7.

In addition, in the present embodiment, a compact oxidation catalyst 8 for reforming fuel injected from the fuel injection valve 7 is provided between the fuel injection valve 7 and the oxidation catalyst 6 in the exhaust conduit 3. The compact oxidation catalyst 8 has a function of partially oxidizing fuel (hydrocarbon: HC) to generate H₂ and CO. The compact oxidation catalyst 8 may be structured as an oxidation catalyst in which rhodium and the like are supported on a carrier made of zeolite, for example. The compact oxidation catalyst 8 in the present embodiment corresponds to a small-section catalyst in the present invention.

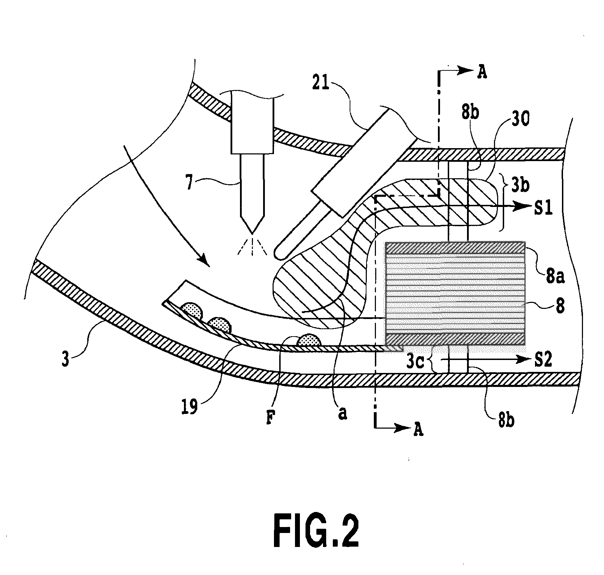

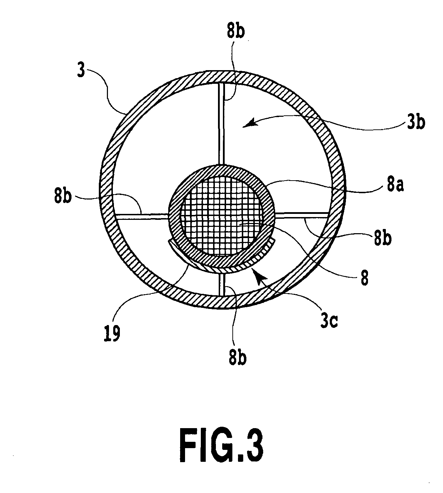

In Fig. 2, an outer diameter of the compact oxidation catalyst 8 is smaller than an inner diameter of the exhaust pipe 3. When the compact oxidation catalyst 8 is accommodated in the exhaust pipe 3, it is possible for the exhaust gas to pass through a gap between an outer peripheral surface of the compact oxidation catalyst 8 and an inner peripheral surface of the exhaust pipe 3 (see Fig. 3). Hereinafter, the gap between the outer peripheral surface of the compact oxidation catalyst 8 and the inner peripheral surface of the exhaust pipe 3 is called "catalyst bypass path". The compact oxidation catalyst 8 is of a so-called straight flow type in which individual cells are communicated from upstream to downstream. The compact oxidation catalyst 8 is arranged in a cylindrical outer frame 8a, and the cylindrical outer frame 8a is supported by a plurality of stays 8b arranged approximately radially shape in the exhaust pipe 3. The compact oxidation catalyst 8 is surrounded by the catalyst bypass path across a substantially entire circumference except the stays 8b.

As shown in Fig. 3, the exhaust pipe 3 is formed in a generally cylindrical shape. In a cross section perpendicular to a flow direction of the exhaust gas, a center or an axis center in the exhaust flow direction of the compact oxidation catalyst 8 is decentered downwardly from a center or an axis center in the exhaust flow direction of the exhaust pipe 3. Therefore, the aforementioned catalyst bypass path is wider in the upper side and narrower in the lower side in the figure. Hereinafter, the former is called "wide-side bypass path 3b" and the latter is called "narrow-side bypass path 3c" as needed.

A glow plug 21 is installed between the fuel injection valve 7 and the compact oxidation catalyst 8. The glow plug 21 is connected via a boost circuit 22 to an in-vehicle direct current power source 23, and is capable of igniting fuel supplied from the fuel injection valve 7 by heat generated when energized.

A collision plate 19 is fixed to the front end part of the compact oxidation catalyst 8. The collision plate 19 may be formed of a material having good heat resistance and impact resistance, such as SUS. The collision plate 19 is generally of a gutter shape, and, as shown in Fig. 3, has a generally arc-shaped cross section perpendicular to a longitudinal direction. A rear end part of the collision plate 19 is fixed to a lower end portion of a front end part in the compact oxidation catalyst 8. The collision plate 19 is arranged in a position decentered downwardly in the exhaust pipe 3. The fuel injection valve 7 injects fuel downwardly toward the collision plate 19. The collision plate 19 promotes grain refining and atomization of the fuel by collision of the fuel therewith to improve dispersibility and diffusionability. A part of the fuel adhering to or floating on the surface of the collision plate 19 is ignited by the glow plug 21, and the other part mainly of a liquid phase is supplied to the compact oxidation catalyst 8. The exhaust pipe 3 has a curved portion 3a (refer to Fig. 1), and the collision plate 19 has a generally front half which is arranged within the curved portion 3a and is curved in the same direction as the curved portion 3a. In a case where the entirety of the collision plate is arranged in the curved portion in the exhaust pipe, the entirety of the collision plate may be curved in the same direction as the exhaust pipe.

The engine 1 is provided with in-cylinder fuel injection valves 9 for supplying into cylinders the fuel to be used for combustion of the engine 1. Further, an ECU 10 as an electronic control unit is provided together with the engine 1 for controlling an operating state in response to an operating condition of the engine 1 or a demand of a driver. The ECU 10 is structured of a CPU for executing various types of calculation processes in relation to control for the engine 1, a ROM for storing programs and data necessary for the control, a RAM for temporarily storing the calculation result of the CPU and the like, input/output ports for inputting/outputting signals between the CPU and the outside, and the like.

In addition to the air flow meter 4, a crank position sensor 16 for detecting a crank angle of the engine 1, an accelerator opening degree sensor 17 for outputting an electrical signal in accordance with an accelerator opening degree, and the like are connected via electrical wiring, and these output signals are inputted to the ECU 10. In addition, the fuel injection valve 7, the in-cylinder fuel injectors 9 and the like are connected via electrical wiring to the ECU 10, and these opening/closing valves are controlled by the ECU 10. The ECU 10 can detect an engine rotational speed based upon an output value of the crank position sensor 16, and detect an engine load of the engine 1 based upon an output value of the accelerator opening degree sensor 17.

In the present embodiment, at the time of executing the temperature increasing process by ignition of fuel, the oxidation processes to the compact oxidation catalyst 8 and the oxidation catalyst 6, and the NOx reduction process and the SOx poisoning recovery process to the NOx catalyst 26, the ECU 10 controls the fuel injection valve 7 to inject fuel into the exhaust gas and supply the fuel to the compact oxidation catalyst 8, the oxidation catalyst 6, and the NOx catalyst 26. A part of the supplied fuel is ignited, and the other part mainly of the liquid phase is supplied to the compact oxidation catalyst 8. An injection quantity of the fuel to be injected by the fuel injection valve 7 can be set for each of individual controls, such as the NOx reduction process, the SOx poisoning recovery process, and the PM regeneration process. A target total injection quantity calculation map for calculating a target total injection quantity adapted for an operating condition of the engine 1 is stored for each kind of the above processes (the temperature increasing process by ignition of fuel, the oxidation process, the NOx reduction process, the SOx poisoning recovery process, the PM regeneration process, and the like) in the ROM in the ECU 10. In addition, in a case of performing the fuel injection control, the ECU 10 detects an engine rotational speed, an accelerator opening degree, and an intake air quantity, gains access to the target total injection quantity calculation map by using these data as parameters, and calculates the target total injection quantity. The ECU 10 calculates an opening time of the fuel injection valve 7 such that the fuel of the target total injection quantity is injected from the fuel injection valve 7. In addition, the ECU 10 issues a command to the fuel injection valve 7 (specifically, a driving mechanism (not shown) to drive the fuel injection valve 7 for opening/closing) to open the fuel injection valve 7 and close it at a point where the calculated opening time elapses.

In the thus-structured present embodiment, the fuel injection valve 7 injects fuel downwardly toward the collision plate 19. The collision plate 19 promotes the grain refining and the atomization of the fuel by collision of the fuel therewith to improve the dispersibility and the diffusionability. A part of the fuel adhering to or floating on the upper surface of the collision plate 19 is ignited by the glow plug 21, and the other part mainly of the liquid phase is supplied to the compact oxidation catalyst 8. The grain refining of the fuel enables the exhaust gas in a state where the fuel is dispersed more uniformly to flow into the compact oxidation catalyst 8. As a result, it is possible to improve a reforming efficiency of the fuel in the compact oxidation catalyst 8. In addition, by supplying the fuel appropriately reformed in the compact oxidation catalyst 8 to the oxidation catalyst 6 and/or the NOx catalyst 26, the PM regeneration process, the NOx reduction process, the SOx poisoning recovery process, and the like can be smoothly executed.

With the downward decentering of the compact oxidation catalyst 8 in the exhaust pipe 3, the wide-side bypass path 3b having a relatively large cross-sectional area is formed upward of the compact oxidation catalyst 8 in the exhaust pipe 3, and a main stream S1 of the exhaust gas is formed in the wide-side bypass path 3b. A sub stream S2 of the exhaust gas is formed in the narrow-side bypass path 3c downward of the compact oxidation catalyst 8. On the other hand, since the fuel injection valve 7 injects the fuel downwardly toward the collision plate 19, the surface of the collision plate 19 to which the fuel can adhere (that is, the upper surface) faces the wide-side bypass path 3b. Therefore even if the fuel adheres to the collision plate 19, since the surface of the collision plate 19 to which the fuel adheres is exposed to the main stream S1 having the relatively large flow speed, the stagnation of the adherent fuel onto the surface of the collision plate 19 can be suppressed.

In addition, in the present embodiment, since there is provided the glow plug 21 capable of igniting the fuel injected from the fuel injection valve 7, by igniting the fuel having adhered to the surface of the collision plate 19 or floating in the vicinity thereto, the stagnation of the adherent fuel F onto the surface of the collision plate 19 can be suppressed, flames 30 in the wide-side bypass path 3b cause a temperature of each of the exhaust gas of the main stream S1 and the compact oxidation catalyst 8 to be high, and finally by the mixing downstream of the compact oxidation catalyst 8, also the reformed fuel discharged from the compact oxidation catalyst 8 can be heated.

In addition, in the present embodiment, the exhaust pipe 3 includes the curved portion 3a, and a part of the collision plate 19 is arranged in the curved portion 3a and is curved in the same direction as a direction of the curved portion 3a. If the curve of each of the exhaust pipe 3 and the collision plate 19 is formed for the outside to be directed to the downward side, since the main stream of the exhaust gas is biased by the centrifugal force toward the fuel having adhered to the collision plate 19. Therefore the stagnation of the fuel on the surface of the collision plate 19 can be preferably suppressed.

In addition, since the rear end part of the collision plate 19 is fixed to the lower end portion of the front end part of the compact oxidation catalyst 8, the fuel having adhered to the collision plate 19 can be preferably guided to the compact oxidation catalyst 8.

### <Second Embodiment>

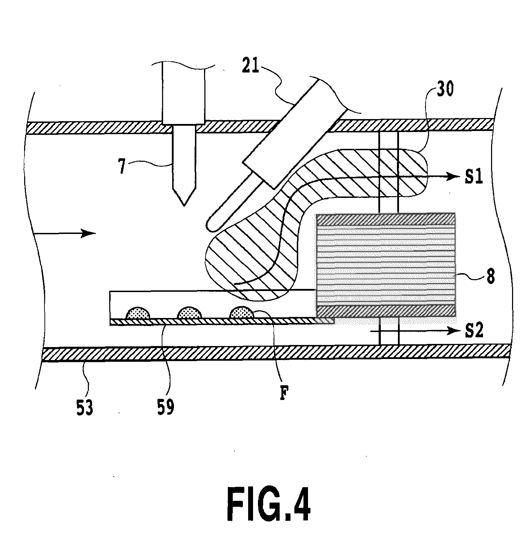

Next, a second embodiment in the present invention will be explained. The second embodiment shown in Fig. 4 is a modification in which the present invention is applied to a straight exhaust pipe 53. A collision plate 59 fixed to the compact oxidation catalyst 8 is in parallel to the exhaust pipe 53, and is not curved. Since the remaining components are the same as those in the first embodiment, identical codes are referred to, and an explanation of the details is omitted.

The second embodiment can obtain the effect similar to that of the first embodiment.

### <Third Embodiment>

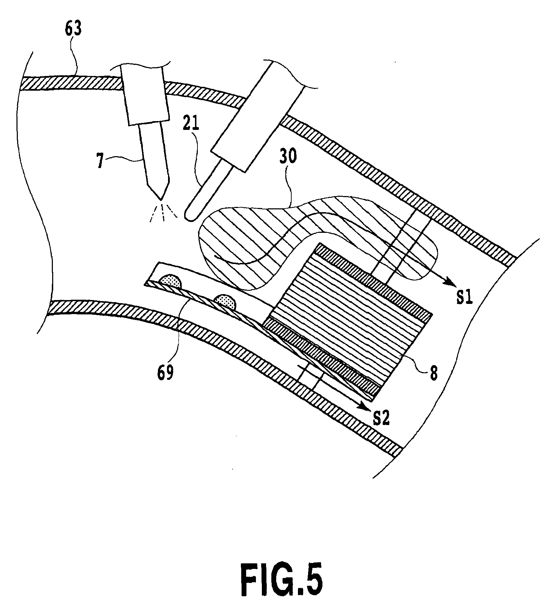

Next, a third embodiment in the present invention will be explained. The third embodiment shown in Fig. 5 is a modification in which the present invention is applied to an exhaust pipe 63 curved to direct the decentering direction of the compact oxidation catalyst 8 to the inside, as opposed to the first embodiment. A collision plate 69 fixed to the compact oxidation catalyst 8 is parallel to an exhaust pipe 63, and, similarly to the exhaust pipe 63, is curved to direct the decentering direction (downward side in the figure) of the compact oxidation catalyst 8 to the inside. Since the remaining components are the same as those in the first embodiment, identical codes are referred to, and an explanation of the details is omitted.

The third embodiment can obtain the effect similar to that of the first embodiment. Further, since the flow speed of the main stream S1 becomes large by the centrifugal force, the stagnation of the fuel F onto the surface of the collision plate 69 can be preferably suppressed.

### <Fourth Embodiment>

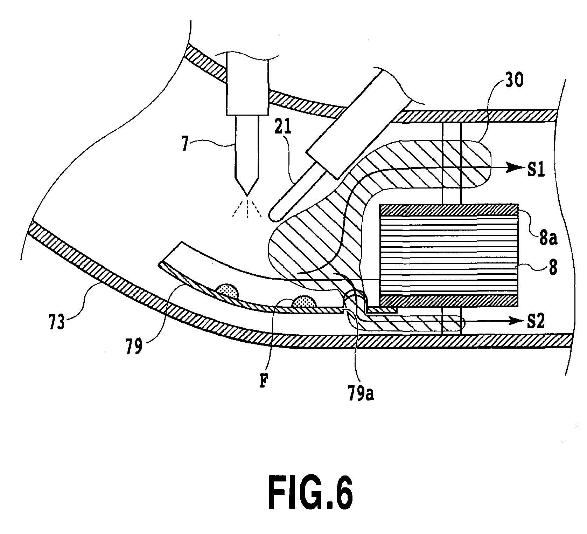

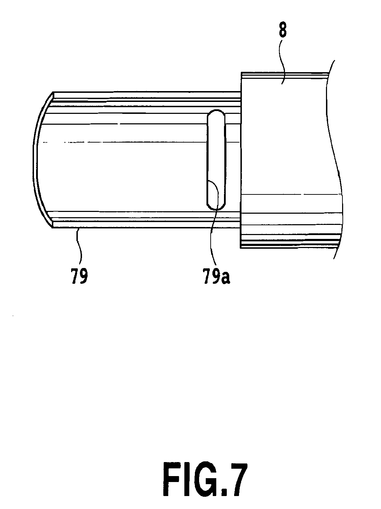

Next, a fourth embodiment in the present invention will be explained. The fourth embodiment shown in Fig. 6 is a modification in which a slit 79a (vent hole) is provided in a collision plate 79. The collision plate 79 has the slit 79a extending laterally downstream the glow plug 21. As shown in Fig. 7, the slit 79a extends in the vicinity to the rear end part of the collision plate 79. Since the remaining components are the same as those in the first embodiment, identical codes are referred to, and an explanation of the details is omitted.

In the fourth embodiment, it is possible to increase a distribution ratio of the sub stream S2 due to the provision of the slit 79a. Further, propagation of the flames 30 through the slit 79a enables a section downstream the collision plate 79 in the outside of the compact oxidation catalyst 8 to be heated. It should be noted that the position, the shape, and the number of the vent hole provided in the collision plate can be selected as needed corresponding to a desired flow speed and flow quantity of the sub stream S2, and a desired heat quantity from the downward side. For example, the vent hole may be formed of a plurality of round holes. The position of the vent hole is preferably downstream a position where the fuel from the fuel injection valve 7 collides, and more preferably downstream the glow plug 21.

Embodiments of the present invention are not limited to the aforementioned respective embodiments, and the present invention includes all modifications and applications included in the concept of the present invention as defined in claims. Therefore, the present invention should not be interpreted in a limiting manner and can be applied to any other technologies included within the scope of the concept in the present invention. For example, the decentering direction of each of the small-section catalyst and the collision plate is not the downward side, but may be the lateral side or the upward side.

In addition, in a range of the function of finely atomizing the fuel injected from the fuel injection valve 7 and the function of guiding the fuel to the compact oxidation catalyst 8, an arrangement method and a configuration of the collision plate can be changed as needed. The collision plate may be arranged to be spaced from the front end part of the compact oxidation catalyst 8 for the exhaust gas to be capable of flowing between the collision plate and the compact oxidation catalyst 8. In addition, instead of the collision plate 19, a punched metal or the like may be arranged such that fuel collides with the punched metal, promoting the grain refining. A longitudinal cross section of the collision plate is not formed in an arc shape, but may be formed in a straight shape. At least one of the compact oxidation catalyst (small-section catalyst) and the exhaust pipe may have a cross section of a non-circular shape, such as an ellipse shape or an oval shape. The type and the order of the other catalyst apparatus existing downstream the compact oxidation catalyst 8 may be selected arbitrarily. Reference Signs List

- 3: Exhaust pipe
- 3a: Curved portion
- 6: Oxidation catalyst
- 7: Fuel supply valve
- 8: Compact oxidation catalyst
- 19: Collision plate
- 21: Glow plug
- 26: NOx catalyst
- 30: Flame
- S1: Main stream
- S2: Sub stream

## Claims

1. An exhaust purifying device for an internal combustion engine comprising:
a small-section catalyst (8) arranged in an exhaust passage (3; 53; 63; 73) of the internal combustion engine and formed so that an exhaust gas flows between an outer peripheral surface of the small-section catalyst (8) and a wall surface of the exhaust passage (3; 53; 63; 73);
a fuel injection valve (7) for injecting liquid fuel toward the exhaust passage (3; 53; 63; 73) upstream the small-section catalyst (8); and
a collision plate (19; 59; 69; 79) provided in the exhaust passage (3; 53; 63; 73) upstream the small-section catalyst (8) and provided in a position where the fuel injected from the fuel injection valve (7) collides;
the exhaust purifying device being **characterized by** further comprising
a heating device (21) capable of igniting the fuel injected from the fuel injection valve (7), wherein
the small-section catalyst (8) and the collision plate (19; 59; 69; 79) are decentered relative to a center axis of the exhaust passage (3; 53; 63; 73) in a predetermined direction similar to each other in the exhaust passage (3; 53; 63; 73), thereby forming a wide-side bypass path (3b) which has a relatively large cross-sectional area, and the fuel injection valve (7) injects the fuel in said predetermined direction toward the collision plate (19; 59; 69; 79) so that the fuel adhering to the collision plate (19; 59; 69; 79) faces said wide-side bypass path (3b).

2. An exhaust purifying device of an internal combustion engine according to claim 1, wherein
the exhaust passage (3; 53; 63; 73) includes a curved portion, and
at least a part of the collision plate (19; 59; 69; 79) is arranged in the curved portion and is curved in the same direction as a direction of the curved portion.

3. An exhaust purifying device for an internal combustion engine according to claim 1, wherein
a rear end part of the collision plate (19; 59; 69; 79) is fixed to an end portion in said predetermined direction side of a front end part of the small-section catalyst (8).

4. An exhaust purifying device for an internal combustion engine according to claim 3, wherein
the collision plate (19; 59; 69; 79) includes a vent hole (79a) downstream the heating apparatus.

5. An exhaust purifying device for an internal combustion engine according to claim 1, wherein
said predetermined direction is a downward direction.

## Patentansprüche

1. Abgasreinigungsvorrichtung für eine Verbrennungskraftmaschine, aufweisend:
einen Kleinabschnittskatalysator (8), der sich in einem Abgasstrang (3; 53; 63; 73) der Verbrennungskraftmaschine befindet und so ausgebildet ist, dass ein Abgas zwischen einer äußeren Randoberfläche des Kleinabschnittskatalysators (8) und einer Wandoberfläche des Abgasstrangs (3; 53; 63; 73) strömt;
ein Kraftstoffeinspritzventil (7) zum Einspritzen von flüssigem Kraftstoff in Richtung des Abgasstrangs (3; 53; 63; 73) stromaufwärts von dem Kleinabschnittskatalysator (8); und
eine Kollisionsplatte (19; 59; 69; 79), die sich in dem Abgasstrang (3; 53; 63; 73) stromaufwärts von dem Kleinabschnittskatalysator (8) befindet und sich an einer Position befindet, an der der von dem Kraftstoffeinspritzventil (7) eingespritzte Kraftstoff kollidiert;
wobei die Abgasreinigungsvorrichtung **dadurch gekennzeichnet ist, dass** sie ferner aufweist:
eine Aufwärmvorrichtung (21), die in der Lage ist, den durch das Kraftstoffeinspritzventil (7) eingespritzten Kraftstoff zu zünden, wobei
der Kleinabschnittskatalysator (8) und die Kollisionsplatte (19; 59; 69; 79) im Verhältnis zu einer Mittelachse des Abgasstrangs (3; 53; 63; 73) in einer vorgegebenen Richtung auf zueinander ähnliche Weise in dem Abgasstrang (3; 53; 63; 73) dezentriert sind, wodurch ein Breitseiten-Bypasspfad (3b) gebildet wird, der eine relativ große Querschnittsfläche aufweist, und das Kraftstoffeinspritzventil (7) den Kraftstoff in der vorgegebenen Richtung in Richtung der Kollisionsplatte (19; 59; 69; 79) einspritzt, so dass der Kraftstoff, der an der Kollisionsplatte (19; 59; 69; 79) haftet, dem Breitseiten-Bypasspfad (3b) zugewandt ist.

2. Abgasreinigungsvorrichtung einer Verbrennungskraftmaschine nach Anspruch 1, wobei
der Abgasstrang (3; 53; 63; 73) einen gebogenen Abschnitt beinhaltet; und zumindest ein Teil der Kollisionsplatte (19; 59; 69; 79) in dem gebogenen Abschnitt angeordnet ist und in derselben Richtung gebogen ist wie der gebogene Abschnitt.

3. Abgasreinigungsvorrichtung für eine Verbrennungskraftmaschine nach Anspruch 1, wobei
ein hinterer Endteil der Kollisionsplatte (19; 59; 69; 79) mit einem Endabschnitt in der vorgegebenen Richtungsseite eines vorderen Endteils des Kleinabschnittskatalysators (8) verbunden ist.

4. Abgasreinigungsvorrichtung für eine Verbrennungskraftmaschine nach Anspruch 3, wobei
die Kollisionsplatte (19; 59; 69; 79) ein Belüftungsloch (79a) stromabwärts von der Aufwärmvorrichtung beinhaltet.

5. Abgasreinigungssystem für eine Verbrennungskraftmaschine nach Anspruch 1, wobei
die vorgegebene Richtung eine Abwärtsrichtung ist.

## Revendications

1. Dispositif d'épuration d'échappement pour un moteur à combustion interne comprenant :
un catalyseur à petite section (8) agencé dans un passage d'échappement (3 ; 53 ; 63 ; 73) du moteur à combustion interne et formé de sorte qu'un gaz d'échappement s'écoule entre une surface périphérique externe du catalyseur à petite section (8) et une surface de paroi du passage d'échappement (3 ; 53 ; 63 ; 73) ;
une valve d'injection de carburant (7) pour éjecter du carburant liquide vers le passage d'échappement (3 ; 53 ; 63 ; 73) en amont du catalyseur à petite section (8) ; et
une plaque de collision (19 ; 59 ; 69 ; 79) prévue dans le passage d'échappement (3 ; 53 ; 63 ; 73) en amont du catalyseur à petite section (8) et prévue dans une position dans laquelle le carburant injecté à partir de la valve d'injection de carburant (7) entre en collision ;
le dispositif d'épuration d'échappement étant **caractérisé en ce qu'**il comprend en outre :
un dispositif de chauffage (21) capable d'allumer le carburant injecté à partir de la valve d'injection de carburant (7), dans lequel :
le catalyseur à petite section (8) et la plaque de collision (19 ; 59 ; 69 ; 79) sont décentrés par rapport à un axe central du passage d'échappement (3 ; 53 ; 63 ; 73) dans une direction prédéterminée similaire entre eux dans le passage d'échappement (3 ; 53 ; 63 ; 73), formant ainsi une trajectoire de dérivation du côté large (3b) qui a une surface transversale relativement grande, et la valve d'injection de carburant (7) injecte le carburant dans ladite direction prédéterminée vers la plaque de collision (19 ; 59 ; 69 ; 79) de sorte que le carburant adhérant à la plaque de collision (19 ; 59 ; 69 ; 79) fait face à ladite trajectoire de dérivation du côté large (3b).

2. Dispositif d'épuration d'échappement d'un moteur à combustion interne selon la revendication 1, dans lequel :
le passage d'échappement (3 ; 53 ; 63 ; 73) comprend une partie incurvée, et
au moins une partie de la plaque de collision (19 ; 59 ; 69 ; 79) est agencée dans la partie incurvée et est incurvée dans la même direction qu'une direction de la partie incurvée.

3. Dispositif d'épuration d'échappement pour un moteur à combustion interne selon la revendication 1, dans lequel :
une partie d'extrémité arrière de la plaque de collision (19 ; 59 ; 69 ; 79) est fixée à une partie d'extrémité du côté de ladite direction prédéterminée d'une partie d'extrémité avant du catalyseur à petite section (8).

4. Dispositif d'épuration d'échappement pour un moteur à combustion interne selon la revendication 3, dans lequel :
la plaque de collision (19 ; 59 ; 69 ; 79) comprend un trou d'évent (79a) en aval de l'appareil de chauffage.

5. Dispositif d'épuration d'échappement pour un moteur à combustion interne selon la revendication 1, dans lequel :
ladite direction prédéterminée est une direction descendante.
